(19) Europäisches Patentamt

European Patent Office

Office européen des brevets

(11) EP 0 700 403 B1

(12) **FASCICULE DE BREVET EUROPEEN**

(45) Date de publication et mention de la délivrance du brevet:
**20.08.1997 Bulletin 1997/34**

(51) Int Cl.6: **C08F 4/02**, B01J 27/16, B01J 21/12

(21) Numéro de dépôt: 94916948.6

(22) Date de dépôt: 10.05.1994

(86) Numéro de dépôt international:
**PCT/EP94/01514**

(87) WO 94/26791 (24.11.1994 Gazette 1994/26)

(54) **PROCEDE DE PREPARATION D'UN SUPPORT POUR CATALYSEURS, CATALYSEUR POUR LA POLYMERISATION D'OLEFINES ET PROCEDE POUR LA POLYMERISATION D'OLEFINES AU MOYEN DE CE CATALYSEUR**

VERFAHREN ZUR HERSTELLUNG EINES KATALYSATORTRÄGERS, KATALYSATOR UND VERFAHREN ZUR OLEFINPOLYMERISATION

PROCESS FOR THE PREPARATION OF A CATALYST SUPPORT, CATALYST FOR OLEFIN POLYMERIZATION AND PROCESS FOR THE POLYMERIZATION OF OLEFINS WITH SAID CATALYST

(84) Etats contractants désignés:
**AT BE CH DE DK ES FR GB IE IT LI NL PT SE**

(30) Priorité: **17.05.1993 BE 9300508**

(43) Date de publication de la demande:
**13.03.1996 Bulletin 1996/11**

(73) Titulaire: **SOLVAY POLYOLEFINS EUROPE - BELGIUM (Société Anonyme)**
**1050 Bruxelles (BE)**

(72) Inventeurs:
• **DERLETH, Helmut**
  **D-3070 Nienburg (DE)**
• **KOCH, Benoît**
  **B-4280 Hannut (BE)**
• **RULMONT, André**
  **B-4031 Liège (BE)**
• **WIJZEN, Fabienne**
  **B-4630 Ayeneux (BE)**

(74) Mandataire: **Destryker, Elise Martine et al**
**Solvay Polyolefins Europe-Belgium (Société Anonyme)**
**Département de la Propriété Industrielle**
**Rue de Ransbeek, 310**
**1120 Bruxelles (BE)**

(56) Documents cités:
EP-A- 0 055 864          DE-A- 2 154 764
GB-A- 2 001 044

**Description**

La présente invention concerne un procédé de fabrication d'un support pour catalyseurs, contenant de la silice et au moins un constituant choisi parmi l'alumine et le phosphate d'aluminium. Elle concerne en outre des catalyseurs pour la polymérisation d'oléfines contenant du chrome sur un tel support, ainsi que l'utilisation de ces catalyseurs dans la polymérisation d'oléfines.

Des supports constitués de mélanges d'oxydes utilisables pour la conversion d'hydrocarbures sont connus. Par exemple, la demande de brevet d'invention FR-A-2315997 divulgue un procédé de préparation de supports comprenant de l'alumine et du phosphate d'aluminium selon lequel on fait réagir un alcoolate d'aluminium avec une solution aqueuse renfermant des ions phosphates, on récupère le support et on le calcine.

Dans la demande de brevet EP-A-283815 on divulgue un procédé de préparation d'une composition contenant de l'alumine comme constituant prépondérant et de la silice, qui comprend les étapes suivantes :

(a) mélanger une première quantité d'une solution aqueuse (I) d'un sel d'aluminium avec une première quantité d'une solution aqueuse (II) d'un aluminate de métal alcalin pour obtenir une suspension d'un hydrogel d'alumine précipité à pH de 8 à 10,
(b) y ajouter une deuxième quantité de la solution (I) pour obtenir un pH de 2 à 4,
(c) y ajouter une deuxième quantité de la solution (II) pour obtenir un pH de 8 à 10,
(d) répéter au moins une fois les étapes (b) et (c),
(e) y ajouter une solution aqueuse d'un silicate de métal alcalin pour obtenir une suspension d'un hydrogel alumine-silice,
(f) séparer l'hydrogel de la suspension,
(g) déshydrater l'hydrogel ainsi obtenu par chauffage.

Le procédé peut comprendre des étapes additionnelles et notamment une étape d'imprégnation de la composition obtenue en (g) au moyen d'une solution contenant un composé de phosphore suivies d'étapes de chauffage.

Dans l'exemple IA de la demande de brevet GB-A-2090158, on décrit un procédé de préparation d'un support pour catalyseurs, composé de silice et de phosphate d'aluminium, selon lequel on prépare une solution contenant de l'isopropanol, de l'eau, de l'acide phosphorique, de l'éthylate de silicium et de l'acide sulfurique, on y ajoute du nitrate d'aluminium, de l'acide phosphoramideux et du nitrate de chrome, et on y introduit de l'hydroxyde d'ammonium pour effectuer une cogélification.

Ce support connu présente un degré d'hétérogénéité élevé et cristallise dès lors très vite lorsqu'il est soumis à une calcination à des températures supérieures à 700 °C. D'autre part, ce support ne combine pas simultanément une surface spécifique élevée avec un volume poreux élevé. Il en résulte que ce support connu ne permet pas de fabriquer des catalyseurs à base de chrome pour la polymérisation d'oléfines, qui présentent, à la fois, une activité catalytique élevée, une période faible d'induction de la polymérisation et une bonne réponse à l'hydrogène. En outre, il ne permet pas d'obtenir des polyoléfines ayant une distribution de masses moléculaires modulable entre une distribution moyennement large et une distribution très large pour un indice de fluidité donné, et il donne généralement lieu à une formation importante d'oligomères.

L'invention remédie à ces inconvénients en fournissant un procédé nouveau, permettant l'obtention d'un support de structure homogène et amorphe, résistant à la cristallisation, possédant simultanément un volume poreux élevé et une surface spécifique élevée, et qui, lorsqu'il est mis en oeuvre comme support pour un catalyseur à base de chrome dans la polymérisation d'oléfines, confère à ce catalyseur l'ensemble des avantages suivants :

- une activité catalytique élevée même en l'absence d'un cocatalyseur,
- une période d'induction de la polymérisation faible, voire nulle,
- une bonne réponse à l'hydrogène,

ce catalyseur permettant d'obtenir des polyoléfines ayant :

- une distribution des masses moléculaires modulable entre une distribution moyennement large et une distribution très large pour un indice de fluidité donné, et
- une fraction faible en oligomères.

En conséquence, l'invention concerne un procédé de préparation d'un support pour catalyseurs contenant de la silice et au moins un constituant choisi parmi l'alumine et le phosphate d'aluminium, selon lequel on mélange, dans une première étape, un alcool, de l'eau, un alcoolate de silicium et un acide en des quantités telles que le rapport molaire eau/silicium soit de 2 à 50, la première étape étant réalisée à pH acide et comprenant, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une gélification ou une précipitation de silice, on ajoute au milieu d'hydrolyse ainsi obtenu, dans une deuxième étape, une solution acide d'un composé d'aluminium et/ou une solution d'une source d'ions phosphates, et, dans une troisième étape, un agent gélifiant pour former un gel précurseur, puis on lave le gel précurseur à l'eau et ensuite au moyen d'un liquide organique, on recueille une suspension du gel dans le liquide organique, puis on soumet la suspension à un séchage jusqu'à l'obtention d'une poudre, et on calcine la poudre; selon l'invention, le séchage est effectué par atomisation.

Dans le procédé selon l'invention, l'alcoolate de silicium mis en oeuvre à la première étape, peut être tout composé dans lequel le silicium est lié à au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. Les alcoolates de silicium comprenant des groupements alkoxy du type aliphatique sont spécialement recommandés; ceux comprenant des groupements alkoxy du type aliphatique saturé, non substitué sont préférés, tels que, par exemple, les groupements méthyle, éthyle, n-propyle, iso-propyle, n-butyle et iso-butyle. Les alcoolates de silicium qui conviennent bien sont le tétra-éthylate, le tétra-méthylate et le tétra-isopropylate de silicium. Tout particulièrement préféré est le tétra-éthylate de silicium. On peut bien entendu mettre en oeuvre plusieurs alcoolates de silicium à la première étape du procédé selon l'invention.

Dans le procédé selon l'invention, l'alcool mis en oeuvre dans la première étape a pour fonction de dissoudre l'alcoolate de silicium. En principe, tout alcool qui solubilise l'alcoolate de silicium et qui est miscible à l'eau, peut convenir. On peut ainsi mettre en oeuvre un alcool dont le groupement hydrocarboné peut être saturé, insaturé, aromatique ou aliphatique, linéaire ou cyclique, non substitué ou substitué partiellement ou totalement. Les alcools aliphatiques linéaires sont préférés. On peut citer comme exemple l'éthanol, l'isopropanol et le méthanol. Tout particulièrement préféré est l'éthanol. Il va de soi qu'on peut mettre en oeuvre simultanément plusieurs alcools dans la première étape du procédé selon l'invention. On utilise de préférence un alcool dont le groupement hydrocarboné correspond à celui du groupe alkoxy de l'alcoolate de silicium utilisé.

La quantité d'alcool mise en oeuvre dans la première étape du procédé selon l'invention, doit être suffisante pour permettre une dissolution complète de l'alcoolate de silicium et dépend dès lors de l'alcoolate de silicium et de l'alcool sélectionnés, de la solubilité de l'alcoolate de silicium dans l'alcool et de la température à laquelle la première étape est effectuée. En pratique, on n'a pas intérêt à utiliser une quantité très supérieure à la quantité minimale nécessaire, car un large excès entraînerait une dilution inutile du mélange issu de la première étape, ce qui est à éviter.

La première étape du procédé suivant l'invention a pour objectif (a) d'hydrolyser partiellement l'alcoolate de silicium en présence d'eau et (b) de condenser partiellement l'alcoolate de silicium hydrolysé, selon les réactions suivantes :

$$(a) \qquad Si(O\text{-}R)_4 + x\ H_2O \rightarrow Si(OH)_x(O\text{-}R)_{4\text{-}x} + x\ R\text{-}OH$$

$$(b) \qquad 2\ Si(OH)_x(O\text{-}R)_{4\text{-}x} \rightarrow O\text{-}[Si(OH)_{x\text{-}1}(O\text{-}R)_{4\text{-}x}]_2 + H_2O$$

ou

$$2\ Si(OH)_x(O\text{-}R)_{4\text{-}x} \rightarrow [Si(OH)_x(O\text{-}R)_{3\text{-}x}]\text{-}O\text{-}[Si(OH)_{x\text{-}1}(O\text{-}R)_{4\text{-}x}] + R\text{-}OH$$

dans lesquelles R représente un radical hydrocarboné pouvant être aromatique ou aliphatique, saturé ou insaturé, linéaire, branché ou cyclique, qui peut éventuellement être différent dans les quatre groupes (O-R), et x représente un nombre supérieur à O et inférieur à 4, de préférence de 0,1 à 3,9. Dans la première étape on utilise une quantité d'eau telle que le rapport molaire entre cette quantité d'eau et la quantité de l'alcoolate de silicium mise en oeuvre soit de 2 à 50. De préférence, ce rapport molaire est de 2 à 20, plus particulièrement de 8 à 12, par exemple environ 10.

Par la suite, on entend désigner par l'expression "alcoolate de silicium hydrolysé et condensé" les composés $O\text{-}[Si(OH)_{x\text{-}1}(O\text{-}R)_{4\text{-}x}]_2$ et $[Si(OH)_x(O\text{-}R)_{3\text{-}x}]\text{-}O\text{-}[Si(OH)_{x\text{-}1}(O\text{-}R)_{4\text{-}x}]$ tels que définis ci-dessus.

Une des caractéristiques essentielles du procédé selon l'invention est la combinaison de conditions opératoires, à la première étape d'hydrolyse, telles qu'on évite toute précipitation ou gélification de silice dans le milieu d'hydrolyse. A cet effet, le mélange à la première étape est réalisé dans des conditions déterminées concernant le pH et la température du milieu d'hydrolyse, le rapport molaire des quantités d'eau et d'alcoolate de silicium mises en oeuvre, et la manière de mélanger les réactifs. Par milieu d'hydrolyse, on entend désigner le milieu obtenu après mélange de l'eau, de l'acide, de l'alcoolate de silicium et de l'alcool. A cet effet, dans la première étape du procédé selon l'invention, le pH du milieu d'hydrolyse est acide. En général, le pH est inférieur à 3, de préférence de 0,5 à 2,5, par exemple environ égal à 1. L'acide mis en oeuvre à la première étape peut être de nature minérale ou organique. Il est avantageusement choisi parmi les acides miscibles à l'eau et dont l'anion est facilement éliminable dans un traitement ultérieur du gel précurseur. Il peut par exemple s'agir de l'acide chlorhydrique, nitrique, phosphorique ou sulfurique. On utilise de préférence l'acide chlorhydrique ou l'acide nitrique. L'acide chlorhydrique convient particulièrement bien. On peut éventuellement mettre en oeuvre plusieurs acides dans la première étape du procédé selon l'invention. La quantité d'acide doit être suffisante pour maintenir le pH acide pendant toute la durée de la première étape. La quantité d'acide dépend dès lors du degré d'acidité de l'acide utilisé ainsi que des autres réactifs, et de la température à laquelle la première étape est réalisée. On n'a pas intérêt à utiliser une quantité trop élevée de l'acide pour éviter de devoir éliminer, dans une étape ultérieure de traitement du gel précurseur, l'excédent d'acide ou de ses dérivés.

Dans la première étape du procédé selon l'invention, il est important de mélanger les réactifs de manière contrôlée afin d'éviter une précipitation ou une gélification de silice et d'éviter que le mélange ne s'échauffe. A cet effet, les réactifs peuvent être mélangés par tout moyen connu adéquat pour autant que la température pendant l'adjonction des réactifs soit au maximum égale à 30 °C et qu'il ne se produise pas de précipitation ni de gélification de silice. De préférence, le mélange est réalisé par addition d'un prémélange comprenant l'eau et l'acide à un prémélange contenant l'alcoolate de silicium et l'alcool. Ceci peut être effectué en ajoutant le prémélange eau/acide au prémélange alcool/alcoolate de silicium. Une autre méthode consiste à ajouter le prémélange alcool/alcoolate de silicium au prémélange eau/acide. On obtient de bons résultats en ajoutant l'un des prémélanges goutte à goutte dans l'autre prémélange maintenu sous agitation. On obtient des résultats particulièrement satisfaisants en ajoutant le prémélange eau/acide, goutte à goutte et sous agitation, au prémélange alcool/alcoolate de silicium.

Dans la première étape du procédé selon l'invention, on maintient la température, pendant l'addition des réactifs, inférieure à 30 °C, de préférence inférieure à 20 °C, typiquement environ 10 °C, les températures supérieures à 0 °C étant recommandées; ensuite, le milieu d'hydrolyse est soumis à un mûrissage à une température au moins égale à 20 °C et inférieure à la température d'ébullition du milieu, par exemple de 30 à 100 °C, les températures de 40 à 80 °C étant les plus courantes et celles de 50 à 70 °C étant recommandées. De préférence, le mûrissage du milieu d'hydrolyse est réalisé à une température supérieure à celle de l'addition des réactifs.

Dans la première étape du procédé selon l'invention, le mûrissage a pour fonction de permettre une hydrolyse et une condensation progressives de l'alcoolate de silicium selon les réactions définies plus haut. Toutes autres choses restant égales, le taux d'hydrolyse de l'alcoolate est d'autant plus élevé (le nombre x est d'autant plus grand) que la durée du mûrissage est grande. La durée du mûrissage doit dès lors être suffisante pour que la réaction d'hydrolyse telle que décrite plus haut ait lieu; elle doit toutefois être inférieure au temps requis pour qu'une gélification ou une précipitation de silice se produise. La durée optimale du mûrissage dépend du pH du milieu d'hydrolyse, de la nature des réactifs présents dans le milieu d'hydrolyse et de la température, et peut varier de quelques minutes à plusieures dizaines d'heures. En général, la durée ne dépasse pas 24 heures. De préférence, la durée est de 0.5 à 3 heures.

Dans un mode de réalisation particulièrement avantageux du procédé selon l'invention, on met en oeuvre en outre, dans la première étape, un alcoolate de titane. L'alcoolate de titane peut par exemple être un composé dans lequel le titane est lié à au moins un groupement alkoxy, tel qu'un alkoxy aromatique ou aliphatique linéaire, branché ou cyclique, saturé ou insaturé, non substitué ou substitué. Les groupements alkoxy comprennent habituellement de 1 à 20 atomes de carbone. L'alcoolate de titane est de préférence soluble dans le milieu d'hydrolyse. L'acétylacétonate de titane convient particulièrement bien. On peut bien entendu mettre en oeuvre plusieurs alcoolates de titane à la première étape du procédé selon l'invention. L'alcoolate de titane peut éventuellement être mis en oeuvre à l'état d'une solution dans un hydrocarbure liquide. Les alcools conviennent bien.

La quantité d'alcoolate de titane mise en oeuvre dans ce mode de réalisation est généralement telle que le titane soit présent dans le gel précurseur en une proportion variant de 0,05 à 20 % en poids, de préférence de 0,1 à 15 % en poids, plus particulièrement de 0,5 à 10 % en poids de titane sur base du poids total de la fraction solide du gel précurseur.

Dans ce mode de réalisation, l'alcoolate de titane peut être mis en oeuvre à tout moment à la première étape. L'alcoolate de titane peut par exemple être ajouté au prémélange comprenant l'eau et l'acide, ou au prémélange contenant l'alcoolate de silicium et l'alcool. En variante, l'alcoolate de titane peut être ajouté au milieu d'hydrolyse obtenu après mélange de l'eau, de l'acide, de l'alcoolate de silicium et de l'alcool, avant, pendant ou après le mûrissage. De bons résultats sont obtenus lorsque l'on ajoute l'alcoolate de titane pendant le mûrissage. On préconise d'ajouter l'alcoolate de titane après une première partie du mûrissage, qui représente avantageusement de 40 à 60 %, par exemple environ 50 %, de la durée totale du mûrissage, la deuxième partie étant effectuée après l'addition de l'alcoolate de titane.

Ce mode de réalisation s'avère spécialement avantageux lorsque l'on souhaite incorporer le titane dans le gel précurseur en une quantité élevée, qui peut aller jusque 20 % en poids du poids total de la fraction solide du gel précurseur, tout en évitant la formation, dans une étape ultérieure, d'agglomérats de dioxyde de titane cristallin sous la forme "anatase" ou "rutile".

Le composé d'aluminium mis en oeuvre à la deuxième étape du procédé selon l'invention peut être tout composé d'aluminium qui est soluble dans la solution acide mise en oeuvre à la deuxième étape et qui est susceptible d'être gélifié sous l'effet d'un agent gélifiant. Spécialement recommandés sont les sels inorganiques d'aluminium et les alcoolates d'aluminium. Parmi les alcoolates d'aluminium, on utilise habituellement ceux dans lesquels l'aluminium est lié à au moins un groupement alkoxy. Parmi les alcoolates d'aluminium, ceux contenant des groupements aliphatiques sont spécialement recommandés; ceux contenant des groupements aliphatiques linéaires saturés non substitués sont préférés, tels que, par exemple, les groupements méthyle, éthyle, n-propyle, iso-propyle, n-butyle et iso-butyle. On utilise de préférence un alcoolate d'aluminium dont les groupements alkoxy contiennent de 1 à 20 atomes de carbone. Les alcoolates d'aluminium dont le groupement alkoxy correspond à celui de l'alcoolate de silicium utilisé, conviennent particulièrement bien.

On obtient des résultats satisfaisants avec les sels inorganiques d'aluminium. Parmi les sels inorganiques d'aluminium, le nitrate et le chlorure d'aluminium sont particulièrement préférés.

Dans une forme d'exécution particulière du procédé selon l'invention, dans laquelle on utilise un alcoolate d'aluminium à titre de composé d'aluminium, on met celui-ci en oeuvre, au moins en partie, à la première étape du procédé selon l'invention, de préférence, le cas échéant, dans le prémélange alcool/alcoolate de silicium. L'alcoolate d'aluminium peut également être ajouté à l'issue de la première étape, après le mûrissage.

Dans le procédé selon l'invention, la source d'ions phosphates désigne tout composé soluble dans la solution mise en oeuvre à la deuxième étape et susceptible d'y former des ions phosphates. Spécialement recommandés sont les sels inorganiques phosphatés [par exemple le phosphate monocalcique de formule $CaH_4(PO_4)_2$, le phosphate disodique de formule $Na_2HPO_4$ et le phosphate tricalcique de formule $Ca_3(PO_4)_2$], les éthers-sels phosphatés [par exemple le phosphate d'éthyle de formule $(C_2H_5)_3PO_4$] et l'acide phosphorique. On utilise de préférence l'acide phosphorique.

La solution acide du composé d'aluminium et la solution de la source d'ions phosphates mise en oeuvre à la deuxième étape du procédé selon l'invention, peuvent être préparées par tout moyen connu adéquat et sont de préférence miscibles avec le mélange obtenu à la première étape du procédé selon l'invention.

Dans une forme d'exécution avantageuse du procédé selon l'invention, la source d'ions phosphates est ajoutée au préalable à la solution acide du composé d'aluminium de manière à ne mettre en oeuvre, à la deuxième étape du procédé selon l'invention, qu'une seule solution, acide, comprenant simultanément le composé d'aluminium et la source d'ions phosphates.

Dans une première variante de cette forme d'exécution du procédé selon l'invention, où la solution acide ne contient que le composé d'aluminium et est exempte de source d'ions phosphates, la solution acide est habituellement obtenue par dissolution du composé d'aluminium dans une quantité d'eau et/ou d'un alcool, suffisante pour assurer une dissolution complète, et en y ajoutant un acide en une quantité suffisante pour éviter la formation d'hydroxyde d'aluminium, qui précipiterait immédiatement et ne participerait dès lors plus à la formation du gel précurseur. On utilise de préférence de l'eau pour dissoudre le composé d'aluminium. En pratique, on n'a pas intérêt à utiliser une quantité de solvant (eau ou alcool) supérieure à la quantité minimale nécessaire, car tout excès de solvant impliquerait de l'éliminer lors du traitement ultérieur de séchage du gel. L'acide mis en oeuvre peut être choisi parmi ceux utilisables dans la première étape du procédé selon l'invention.

Dans une deuxième variante de cette forme d'exécution du procédé selon l'invention, où la solution acide ne contient que la source d'ions phosphates et est exempte de composé d'aluminium, la solution acide est généralement préparée en dissolvant la source d'ions phosphates dans une quantité d'eau et/ou d'alcool suffisante et de préférence sans excès exagéré pour les motifs exposés ci-dessus. Dans cette deuxième variante, la source d'ions phosphates confère un caractère acide à la solution, de sorte qu'il est inutile d'ajouter un acide supplémentaire à la solution.

Dans une troisième variante de cette forme d'exécution du procédé selon l'invention, qui est préférée, la solution contient simultanément le composé d'aluminium et la source d'ions phosphates, et la solution acide est obtenue par dissolution du composé d'aluminium et de la source d'ions phosphates dans un ordre quelconque dans une quantité d'eau et/ou d'alcool suffisante mais sans excès exagéré pour les motifs exposés ci-dessus. Dans cette variante préférée, il peut s'avérer inutile d'y ajouter en outre un acide, à condition que la source d'ions phosphates confère à la solution une acidité suffisante pour éviter la formation d'hydroxyde d'aluminium.

Il va de soi que l'on peut mettre en oeuvre simultanément, à la deuxième étape, plusieurs composés d'aluminium et/ou plusieurs sources d'ions phosphates.

Dans la deuxième étape du procédé selon l'invention, l'addition de la solution acide du composé d'aluminium et de la solution de la source d'ions phosphates au mélange obtenu à la première étape peut par exemple être effectuée en versant le mélange issu de la première étape dans une des deux solutions ou dans le mélange de ces deux solutions (la solution acide du composé d'aluminium et la solution de la source d'ions phosphates). En variante, le mélange des deux solutions peut être ajoutée au mélange issu de la première étape, dans quel cas on préfère opérer de manière très lente pour éviter que le milieu ainsi obtenu s'échauffe, en introduisant le mélange des deux solutions goutte à goutte dans le milieu, sous une forte agitation, le milieu étant thermostatisé à une température inférieure à 30 °C, typiquement inférieure ou égale à 20 °C, par exemple comprise entre 0 et 10 °C pendant toute la durée de l'ajout.

L'agent gélifiant mis en oeuvre à la troisième étape du procédé selon l'invention, est tout composé susceptible de provoquer une cogélification des réactifs mis en oeuvre à la première et la deuxième étape (l'alcoolate de silicium hydrolysé et condensé issu de la première étape et défini plus haut, le composé d'aluminium et/ou la source d'ions phosphates et éventuellement l'alcoolate de titane) sous la forme d'un oxyde mixte de silicium et d'aluminium et/ou de phosphore et éventuellement de titane. On peut citer comme exemple d'agent gélifiant, l'oxyde d'éthylène, le carbonate d'ammonium et l'hydroxyde d'ammonium. On utilise de préférence une solution aqueuse d'hydroxyde d'ammonium.

La quantité d'agent gélifiant mise en oeuvre à la troisième étape est de préférence suffisante pour permettre une gélification complète de l'alcoolate de silicium hydrolysé et condensé défini plus haut, du composé d'aluminium et du composé phosphaté présents dans le milieu de cogélification. Par milieu de cogélification, on entend désigner le mélange réactionnel en cours de gélification à la troisième étape du procédé. Le milieu de cogélification comprend dès lors le milieu obtenu à l'issue de la deuxième étape du procédé selon l'invention (comprenant l'alcoolate de silicium hydrolysé et condensé, le composé d'aluminium et/ou la source d'ions phosphates) et l'agent gélifiant. La quantité d'agent gélifiant mise en oeuvre est avantageusement suffisante pour permettre une cogélification complète de la masse totale d'alcoolate de silicium hydrolysé et condensé, de composé d'aluminium et de source d'ions phosphates; elle est de préférence légèrement supérieure à cette quantité suffisante.

Dans la troisième étape du procédé selon l'invention, le pH du milieu de cogélification est généralement supérieur ou égal à 5, typiquement supérieur ou égal à 6; il est habituellement inférieur à 11, les valeurs inférieures à 10 étant recommandées. De préférence, on maintient le pH constant à une valeur de 6 à 10, par exemple 8, pendant toute la durée de la cogélification. La constance du pH peut être assurée par tout moyen connu adéquat, par exemple en utilisant un tampon inerte vis-à-vis des réactifs en cours de gélification, ou en utilisant une installation permettant une alimentation contrôlée, continue ou discontinue, d'un composé modifiant le pH, dans le milieu de cogélification. On utilise de préférence un récipient contenant l'agent gélifiant, dans lequel on introduit séparément et de manière contrôlée le mélange issu de la deuxième étape et un composé régulateur de pH. On peut employer comme composé régulateur de pH, tout composé acide ou basique, inerte vis-à-vis des réactifs en cours de gélification.

Dans la troisième étape du procédé selon l'invention, il peut s'avérer avantageux, selon les propriétés du gel précurseur qu'on souhaite obtenir, de thermostatiser le milieu de cogélification à une température inférieure ou égale à 30 °C, de préférence à une température de 0 à 20 °C.

Dans une première forme d'exécution particulièrement avantageuse du procédé selon l'invention, on peut en outre incorporer dans le gel précurseur, un métal de transition choisi parmi les éléments des groupes IVB et VB du tableau périodique, tels que le zirconium et le vanadium, ou un élément du groupe IIIA du tableau périodique, différent de l'aluminium, tel que le bore. A cet effet, on ajoute un sel organique ou inorganique ou un alcoolate d'un de ces éléments au mélange obtenu à la première ou à la deuxième étape du procédé selon l'invention, avant d'effectuer l'étape suivante. Le cas échéant, on peut ajouter le sel ou l'alcoolate au prémélange eau/acide ou au prémélange alcool/alcoolate de silicium mis en oeuvre à la première étape du procédé selon l'invention.

Dans une deuxième forme d'exécution du procédé selon l'invention, que l'on préfère, on soumet le gel issu de la troisième étape à une maturation. Celle-ci est réalisée dans un milieu de maturation, qui peut être le milieu de cogélification recueilli de la troisième étape, éventuellement sous agitation. On peut y ajouter un composé inerte modifiant le pH du milieu de maturation, par exemple un composé basique. En variante, le gel est d'abord séparé du milieu de cogélification, par exemple par centrifugation, et ensuite remis en suspension dans un liquide inerte tel que de l'eau ou un alcool pour effectuer la maturation. Cette variante présente l'avantage d'éliminer une partie des impuretés ioniques adsorbées dans le gel, provenant des réactifs mis en oeuvre lors de la fabrication du gel.

La maturation a pour fonction de prolonger la cogélification et ainsi modifier la surface spécifique et le volume poreux du gel. Elle est habituellement effectuée à une température pouvant varier de la température ambiante jusqu'à la température d'ébullition du milieu de maturation. On opère de préférence à environ 20 °C. La durée de la maturation dépend de la température et des propriétés (surface spécifique et volume poreux) requises du support. Elle peut dès lors varier de quelques minutes à plusieurs dizaines d'heures. Les meilleurs résultats sont obtenus avec une durée d'au moins une heure. Pour des considérations d'ordre économique, on n'a pas intérêt à prolonger la maturation au delà de 48 heures.

La maturation est en général effectuée à un pH supérieur ou égal à 6, de préférence de 8 à 10.

A l'issue de la troisième étape du procédé selon l'invention et, le cas échéant, après maturation on recueille un gel précurseur que l'on soumet ensuite à un lavage, d'abord à l'eau et ensuite au moyen d'un liquide organique.

Le lavage à l'eau consiste en général à mettre le gel en suspension dans une quantité d'eau suffisante pour éliminer une partie au moins des impuretés contenues dans le gel, et ensuite à éliminer une partie au moins de cette quantité d'eau par tout moyen connu adéquat, par exemple par centrifugation ou par filtration. On opère de préférence par centrifugation compte tenu de la rapidité de cette méthode. On peut bien entendu répéter ce lavage à l'eau plusieurs fois. La température à laquelle ce lavage est effectué a peu d'influence sur l'efficacité du lavage et peut dès lors varier dans une large mesure. On opère de préférence à température ambiante.

Ensuite, on soumet le gel lavé à l'eau, à un lavage au moyen d'un liquide organique, par exemple en dispersant le gel dans ce liquide organique à température ambiante. Le lavage avec le liquide organique a pour fonction d'éliminer une partie au moins de l'eau qui imprègne le gel. Le liquide organique sélectionné doit être au moins partiellement miscible avec l'eau, inerte vis-à-vis du gel mais toutefois capable de mouiller le gel. Il présente préférentiellement une température de vaporisation inférieure à 120 °C, typiquement inférieure à 100 °C, par exemple de 70 à 90 °C. Des liquides organiques utilisables dans ce lavage sont les alcools, les éthers ou leurs mélanges. Les alcools sont préférés, particulièrement ceux comprenant de 1 à 4 atomes de carbone. L'isopropanol convient bien. On peut bien entendu répéter plusieurs fois ce lavage au moyen d'un liquide organique, et mettre en oeuvre simultanément plusieurs liquides organiques. A l'issue du lavage, il est souhaitable de séparer le gel d'une partie au moins de l'eau et du liquide organique utilisé par centrifugation ou par filtration.

Dans le procédé selon l'invention, on recueille après lavage au moyen d'un liquide organique une suspension du gel dans le liquide organique, qu'on soumet à un séchage par atomisation afin d'éliminer l'eau et le liquide organique non éliminés précédemment, jusqu'à l'obtention d'une poudre du support à l'état de particules atomisées.

L'atomisation peut par exemple être réalisée en pulvérisant la suspension du gel à travers un orifice de petite dimension. Elle est en général effectuée dans un courant gazeux inerte vis-à-vis du gel. Le courant gazeux est de préférence exempt d'oxygène. Un courant gazeux comprenant essentiellement de l'azote convient bien. La température du courant gazeux est le plus souvent supérieure à 100 °C. On préconise par exemple des températures de 150 à 450 °C (de préférence de 200 à 400 °C, par exemple environ 300 °C) à l'entrée de l'orifice d'atomisation, et de 20 à 200 °C (de préférence de 50 à 150 °C) à la fin de l'atomisation. On peut travailler indifféremment sous pression inférieure, égale ou supérieure à la pression atmosphérique. Les pressions supérieures ou égales à la pression atmosphérique sont préférées, les valeurs de 1 à 10 bar étant les plus recommandées. La suspension du gel peut être introduite à la température ambiante (entre 15 et 25 °C) dans le gaz, les particules atomisées se trouvant habituellement à la même température que le gaz à la fin de l'atomisation.

On obtient le plus souvent, à l'issue du séchage, une poudre présentant une teneur en humidité inférieure à 1 % en poids, de préférence inférieure à 0,5 % en poids, par exemple inférieure à 0,2 % en poids.

Le séchage par atomisation s'avère particulièrement avantageux car il permet d'optimiser simultanément la morphologie et la porosité des supports obtenus, de manière à ce qu'ils sont aptes à être utilisés comme supports de catalyseurs pour la polymérisation d'oléfines. En effet, les particules atomisées sont caractérisées, d'une part, par une distribution étroite de dimensions, et d'autre part, par une distribution étroite des rayons de pores et par une teneur en macropores de rayon supérieur à 2000 Å réduite voire nulle, tout en conservant un volume poreux élevé.

A l'issue du séchage par atomisation, on recueille une poudre du support, que l'on peut éventuellement passer au tamis pour en séparer les grains de taille non souhaitée. On soumet cette poudre à une calcination. La calcination a pour fonction d'extraire, à température élevée, les impuretés organiques de la poudre. Elle est généralement poursuivie jusqu'à ce que le poids de la poudre reste constant au cours du temps, tout en évitant une cristallisation de la poudre. La calcination peut être effectuée sous air (de préférence sous air sec) dans un lit fluidisé à une température inférieure à la température de cristallisation de la poudre. La température est en général de 300 à 1500 °C, typiquement de 350 à 1000 °C, de préférence de 400 à 600 °C.

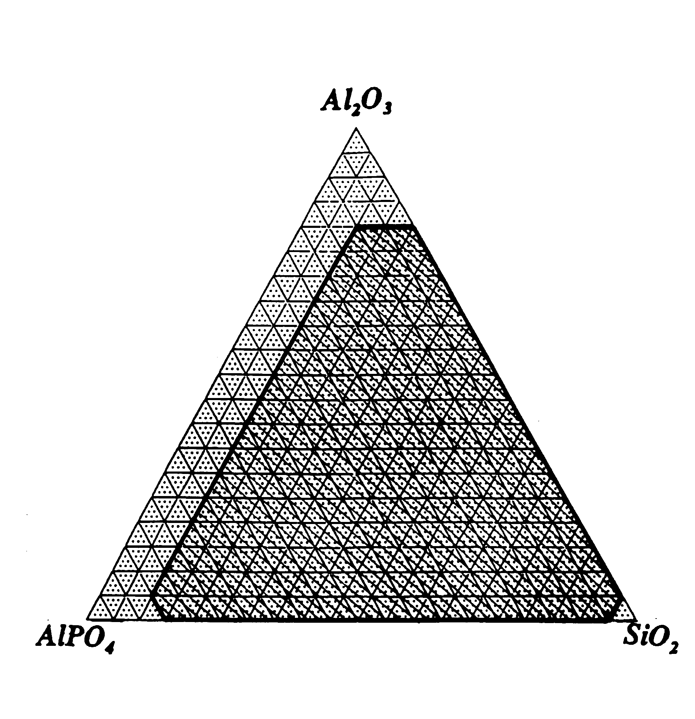

Le procédé selon l'invention permet, moyennant un mode opératoire unique, de préparer des supports pour catalyseurs, contenant des oxydes mixtes de silicium, d'aluminium et/ou de phosphore dans une large gamme de concentrations. En effet, le procédé selon l'invention permet de parcourir tout le diagramme ternaire entre la composition de la silice, de l'alumine et du phosphate d'aluminium. La figure annexée représente ce diagramme ternaire des phases. Le procédé selon l'invention apparaît particulièrement performant pour la fabrication de supports dont la composition est située dans la partie hachurée dudit diagramme ternaire des phases. Le procédé selon l'invention permet également l'incorporation dans le support d'un métal de transition ou d'un élément tel que le bore.

Le procédé selon l'invention permet de préparer des supports pour catalyseurs à l'état amorphe qui présentent une dispersion des constituants très homogène, et qui présentent, en combinaison, une surface spécifique, un volume poreux et une résistance à la cristallisation qui les rendent performants dans la polymérisation d'oléfines.

Vu ses caractéristiques physiques et structurales, le support obtenu au moyen du procédé selon l'invention trouve une application particulièrement intéressante comme support pour catalyseurs dans la polymérisation d'oléfines, le catalyseur consistant avantageusement en oxyde de chrome.

Les supports préparés au moyen du procédé selon l'invention de préparation d'un support sont particulièrement performants car ils permettent l'obtention de catalyseurs pour la fabrication de polyoléfines dont l'indice de fluidité peut varier dans une large mesure.

Par ailleurs, les supports contenant en outre du titane permettent l'obtention de catalyseurs pour la fabrication de polyoléfines de bonnes propriétés mécaniques. En outre, la présence de titane dans le support permet l'obtention de polyoléfines d'indice de fluidité très variable.

L'invention concerne dès lors également un catalyseur pour la polymérisation d'oléfines contenant du chrome sur un support obtenu au moyen du procédé conforme à l'invention, défini plus haut.

Le catalyseur selon l'invention peut être obtenu de manière connue en soi par imprégnation de la poudre de support avec une solution aqueuse ou organique d'un composé du chrome, suivie d'un séchage en atmosphère oxydante. On peut utiliser à cet effet un composé du chrome choisi parmi les sels solubles tels que les oxydes, l'acétate, le chlorure, le sulfate, le chromate et le bichromate en solution aqueuse, ou tel que l'acétylacétonate en solution organique. Après l'imprégnation du support avec le composé du chrome, le support imprégné est habituellement activé en le chauffant à une température de 400 à 1000 °C pour transformer une partie au moins du chrome en chrome hexavalent.

Le catalyseur selon l'invention peut également être obtenu au moyen d'un mélange mécanique de la poudre du support avec un composé solide du chrome, par exemple de l'acétylacétonate de chrome. Ensuite, ce mélange peut être préactivé à une température inférieure à la température de fusion du composé du chrome avant de l'activer conventionnellement comme décrit ci-dessus.

En variante, le composé du chrome peut également être incorporé à la poudre du support pendant la fabrication de celle-ci ou pendant la fabrication du gel précurseur de ce support. A cet effet, il peut par exemple être ajouté, en partie ou en totalité, à la solution acide du composé d'aluminium et/ou de la source d'ions phosphates mise en oeuvre à la deuxième étape du procédé selon l'invention de fabrication d'un gel précurseur de manière à coprécipiter l'oxyde de chrome simultanément avec l'oxyde de silicium, d'aluminium et/ou de phosphore. On peut également ajouter le composé du chrome au gel précurseur avant ou après le mûrissage de celui-ci.

Dans le catalyseur selon l'invention, le chrome est généralement présent en proportion variant de 0,05 à 10 % en poids, de préférence de 0,1 à 5 % en poids, plus particulièrement de 0,25 à 2 % en poids de chrome sur base du poids total du catalyseur.

Le catalyseur selon l'invention apparaît particulièrement performant dans la polymérisation d'oléfines. En effet, pour cette application, le catalyseur selon l'invention présente l'ensemble des avantages suivants :

- une activité catalytique élevée même en l'absence d'un cocatalyseur,
- une période d'induction faible, voire nulle,
- une bonne réponse à l'hydrogène;

il permet en outre l'obtention de polyoléfines ayant :

- une distribution des masses moléculaires modulable de moyennement large à très large pour un indice de fluidité donné, et
- une teneur faible en oligomères.

Le catalyseur selon l'invention peut être utilisé pour la polymérisation d'oléfines contenant de 2 à 8 atomes de carbone par molécule, et en particulier, pour la production d'homopolymères de l'éthylène ou de copolymères de l'éthylène avec un ou plusieurs comonomères sélectionnés parmi les alpha-oléfines décrites ci-dessus. De préférence, ces comonomères sont le propylène, le 1-butène, le 1-pentène, le 3-méthyl-1-butène, le 1-hexène, les 3- et 4- méthyl-1-pentènes et le 1-octène. Des dioléfines comprenant de 4 à 18 atomes de carbone peuvent également être copolymérisées avec l'éthylène. De préférence, les dioléfines sont des dioléfines aliphatiques non conjuguées telles que le 4-vinylcyclohexène ou des dioléfines alicycliques ayant un pont endocyclique telles que le dicyclopentadiène, le méthylène- et l'éthylidène-norbornène, et des dioléfines aliphatiques conjuguées telles que le 1,3-butadiène, l'isoprène et le 1,3-pentadiène.

Le catalyseur selon l'invention convient particulièrement bien pour la fabrication d'homopolymères de l'éthylène et de copolymères contenant au moins 90 %, de préférence au moins 95 % en poids d'éthylène. Les comonomères préférés sont le propylène, le 1-butène, le 1-hexène ou le 1-octène.

L'invention concerne dès lors également un procédé pour la polymérisation d'oléfines telles que définies plus haut, mettant en oeuvre un catalyseur conforme à l'invention. Dans le procédé de polymérisation selon l'invention, la polymérisation peut être effectuée indifféremment en solution, en suspension dans un diluant hydrocarboné ou encore en phase gazeuse. On obtient de bons résultats dans les polymérisations en suspension.

La polymérisation en suspension est effectuée dans un diluant hydrocarboné tel que les hydrocarbures aliphatiques, cycloaliphatiques et aromatiques liquides, à une température telle qu'au moins 80 % (de préférence au moins 90 %) du polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cylcopentane et le cyclohexane ou leurs mélanges.

La température de polymérisation est choisie généralement entre 20 et 200 °C, de préférence entre 50 et 150 °C, en particulier entre 80 et 115 °C. La pression d'éthylène est choisie le plus souvent entre la pression atmosphérique et 5 MPa, de préférence entre 0,4 et 2 MPa, plus particulièrement entre 0,6 et 1,5 MPa.

La polymérisation peut être effectuée en continu ou en discontinu, en un seul réacteur ou dans plusieurs réacteurs disposés en série, les conditions de polymérisation (température, teneur éventuelle en comonomère, teneur éventuelle en hydrogène, type de milieu de polymérisation) dans un réacteur étant différentes de celles utilisées dans les autres réacteurs.

Les exemples dont la description suit, servent à illustrer l'invention. Dans ces exemples on a d'abord préparé des supports pour catalyseurs. Puis on a appliqué des catalyseurs sur ces supports. On a employé les catalyseurs supportés ainsi obtenus, pour polymériser de l'éthylène.

La signification des symboles utilisés exprimant les grandeurs mentionnées et les méthodes de mesure de ces grandeurs sont explicitées ci-dessous.

SS = surface spécifique du support mesurée par la méthode de pénétration à l'azote selon la méthode volumétrique de la norme britannique BS 4359/1 (1984).

VP = volume poreux du support, égal à la somme du volume poreux constitué de pores de rayon inférieur ou égal à 75 Å, mesuré par la méthode de pénétration à l'azote selon la méthode volumétrique de la norme britannique BS 4359/1 (1984), et du volume poreux mesuré par la méthode de pénétration au mercure au moyen du porosimètre du type PORO 2000 commercialisé par CARLO ERBA CO, selon la norme belge NBN B 05-202 (1976).

$T_c$ = température de cristallisation déterminée au moyen de la méthode définie plus haut.

F0 = fraction en oligomères du polymère, exprimée en gramme d'oligomères par kilo de polymère et mesurée par extraction à l'hexane à la température d'ébullition de l'hexane.

$\alpha$ = activité catalytique exprimée en grammes de polymère, obtenus par heure et par gramme de catalyseur mis en oeuvre et divisés par la pression partielle de l'oléfine exprimée en bar.

$T_{ind}$ = temps d'induction, exprimé en minutes et défini comme étant le temps écoulé entre l'introduction de l'éthylène et l'apparition d'une diminution de pression caractéristique du début de la polymérisation.

HLMI = indice de fluidité du polymère fondu à 190 °C, mesuré sous une charge de 21,6 kg et exprimé en g/10 min, suivant la norme ASTM D 1238 (1986).

$\eta_0/\eta_2$ = rapport entre la viscosité dynamique ($\eta_0$), exprimée en dPa.s et mesurée à un gradient de vitesse de 1 s$^{-1}$ et à 190 °C, et la viscosité dynamique ($\eta_2$), exprimée en dPa.s et mesurée à un gradient de vitesse de 100 s$^{-1}$ et à 190 °C.

Exemples 1 et 2 (conformes à l'invention)

A. Préparation d'un gel précurseur

a) Première étape

On a ajouté, goutte à goutte, à une solution de tétra-éthylate de silicium et d'éthanol, thermostatisée à 10 °C, une solution d'eau et d'acide chlorhydrique 1 M, de telle manière à obtenir une concentration en H$^+$ de 0,1 M. Les quantités de tétra-éthylate de silicium, d'éthanol, d'eau et d'acide chlorhydrique qui ont été mises en oeuvre, sont présentées dans le tableau I. Ensuite, on a soumis le milieu d'hydrolyse ainsi obtenu à un mûrissage à 60 °C pendant 2 heures.

b) Deuxième étape

On a préparé une solution aqueuse contenant du nitrate (exemple 1), respectivement du chlorure d'aluminium hydraté (exemple 2) et de l'acide phosphorique, les quantités mises en oeuvre étant représentées dans le tableau I. Ensuite, on a ajouté la solution ainsi obtenue au milieu d'hydrolyse obtenu en (a), sous agitation vigoureuse et à 10 °C.

c) Troisième étape

On a ajouté à 500 g d'une solution aqueuse d'hydroxyde d'ammonium de pH 8 thermostatisée à 10 °C, le mélange obtenu en (b), en maintenant le pH constant à une valeur de 8, afin d'effectuer une gélification.

d) Maturation

On a soumis le gel obtenu en (c) à une maturation à pH 8, pendant 2 heures, sous légère agitation et à 60 °C.

B. Préparation d'un support de catalyseur

a) Lavage

On a lavé le gel obtenu en A d'abord 3 fois à l'eau, puis 1 fois au moyen d'isopropanol et on a recueilli une suspension du gel dans l'isopropanol.

b) Séchage

On a soumis la suspension obtenue en (a) à une atomisation par passage à travers un orifice de pulvérisation de 1 mm de diamètre, à l'intérieur d'une enceinte parcourue par un courant d'un gaz contenant essentiellement de l'azote. Le débit du gaz a été réglé de manière à ce que sa température chute de 300 °C, à l'entrée de l'enceinte, à une température de 80 à 100 °C à la sortie de celle-ci. On a recueilli après atomisation des particules dont la teneur en humidité est inférieure à 1 % en poids.

c) Calcination

On a calciné la poudre obtenue en (b) dans un lit fluidisé sous balayage d'air sec, pendant 4 heures à 500 °C. On a recueilli une poudre d'un support dont la composition (% molaire de silice, d'alumine et de phosphate d'aluminium), la surface spécifique, le volume poreux et la température de cristallisation sont représentés dans le tableau I.

Tableau I

| Exemple | 1 | 2 |
|---|---|---|
| Première étape : | | |
| quantité mise en oeuvre de : | | |
| tétra-éthylate de silicium (g) | 34,7 | 46,3 |
| éthanol (g) | 41,7 | 55,6 |
| eau (g) | 18,9 | 24,9 |
| acide chlorhydrique 1 M (g) | 11,5 | 16,5 |
| Deuxième étape : | | |
| quantité mise en oeuvre de : | | |
| $AlX_3.xH_2O$ (g) | 62,5 $X=NO_3$ $x=9$ | 160,8 $X=Cl$ $x=6$ |
| acide phosphorique de 85 % (g) | 25,6 | 25,6 |
| eau (g) | 33,3 | 133,2 |
| Support obtenu : | | |
| composition : Si (% en poids) | 14,6 | 8,9 |
| Al (% en poids) | 14,3 | 29,4 |
| P (% en poids) | 14,5 | 10,9 |
| SS ($m^2$/g) | 385 | 290 |
| VP ($cm^3$/g) | 2,47 | 3,44 |
| $T_c$ (°C) | > 700 | > 700 |

C. Préparation d'un catalyseur

On a mélangé le support obtenu en B avec de l'acétylacétonate de chrome en une quantité telle que le mélange comprenne 0,7 % en poids de chrome. Puis, on a traité le mélange ainsi obtenu dans un lit fluidisé à 150 °C pendant 2 heures sous balayage d'air sec. Ensuite, on l'a calciné dans le lit fluidisé à 700 °C pendant 5 heures sous air sec, et on a recueilli le catalyseur.

D. Polymérisation de l'éthylène

Dans un autoclave de 3 litres, préalablement séché et muni d'un agitateur, on a introduit 100 mg du catalyseur obtenu en C et 1 litre d'isobutane. La température a été élevée à 104 °C et de l'éthylène a été introduit dans l'autoclave à une pression partielle de 1,09 MPa. De l'hydrogène a été introduit à une pression partielle de 0,29 MPa. La pression d'éthylène et la température ont été maintenues constantes durant le temps nécessaire à la production d'une quantité définie de polyéthylène. Après dégazage, le polymère a été récupéré sous forme de particules, dont les propriétés sont rassemblées dans le tableau II, ainsi que l'activité du catalyseur.

Tableau II

| Exemple | 1 | 2 |
|---|---|---|
| α | 34448 | 30032 |
| $T_{ind}$ | 5 | 4 |

Tableau II   (suite)

| Exemple | 1 | 2 |
|---|---|---|
| HLMI | 40 | 23 |
| F0 | 22 | 21 |
| $\eta_0/\eta_2$ | 8,0 | 9,4 |

## Revendications

1.  Procédé pour la fabrication d'un support pour catalyseurs contenant de la silice et au moins un constituant choisi parmi l'alumine et le phosphate d'aluminium, selon lequel on mélange, dans une première étape, un alcool, de l'eau, un alcoolate de silicium et un acide en des quantités telles que le rapport molaire eau/silicium soit de 2 à 50, la première étape étant réalisée à pH acide, et comprenant, d'une part, l'adjonction de l'eau, de l'acide, de l'alcoolate de silicium et de l'alcool, la température, pendant l'adjonction, étant inférieure ou égale à 30 °C, et, d'autre part, un mûrissage du milieu d'hydrolyse ainsi obtenu à une température au moins égale à 20 °C et inférieure à la température d'ébullition du milieu, de manière à substituer une partie au moins des groupements alkoxy de l'alcoolate de silicium par des groupements hydroxy, sans qu'il se produise une précipitation ou gélification de silice, on ajoute au milieu d'hydrolyse ainsi obtenu, dans une deuxième étape, une solution acide d'un composé d'aluminium et/ou une solution d'une source d'ions phosphates, et, dans une troisième étape, un agent gélifiant pour former un gel précurseur, puis on lave le gel à l'eau et ensuite au moyen d'un liquide organique, on recueille une suspension du gel dans le liquide organique, puis on soumet la suspension à un séchage jusqu'à l'obtention d'une poudre, et on calcine la poudre, caractérisé en ce que le séchage est effectué par atomisation.

2.  Procédé selon la revendication 1, caractérisé en ce que l'atomisation est réalisée en pulvérisant la suspension du gel à travers un orifice de petite dimension.

3.  Procédé selon la revendication 1 ou 2, caractérisé en ce que l'atomisation est réalisée dans un courant gazeux inerte vis-à-vis du gel.

4.  Procédé selon la revendication 3, caractérisé en ce que le courant gazeux comprend essentiellement de l'azote et est exempt d'oxygène.

5.  Procédé selon l'une quelconque des revendications 1 à 4, caractérisé en ce que la température du courant gazeux est supérieure à 100 °C.

6.  Procédé selon la revendication 5, caractérisé en ce que la température du courant gazeux est de 150 à 450 °C à l'entrée de l'orifice d'atomisation, et de 20 à 200 °C à la fin de l'atomisation.

7.  Procédé selon l'une quelconque des revendications 1 à 6, caractérisé en ce que l'atomisation est effectuée à une pression de 1 à 10 bar.

8.  Catalyseur pour la polymérisation d'oléfines contenant du chrome sur un support obtenu au moyen du procédé conforme à l'une quelconque des revendications 1 à 7.

9.  Procédé pour la polymérisation d'oléfines selon lequel on met en oeuvre un catalyseur conforme à la revendication 8.

10. Procédé selon la revendication 9 appliqué à la polymérisation de l'éthylène.

## Claims

1.  Process for the manufacture of a support for catalysts containing silica and at least one constituent chosen from alumina and aluminium phosphate, according to which, in a first stage, an alcohol, water, a silicon alkoxide and an acid are mixed in amounts such that the water/silicon molar ratio is from 2 to 50, the first stage being carried out at acid pH and comprising, on the one hand, the addition of water, acid, silicon alkoxide and alcohol, the temperature, during the addition, being less than or equal to 30°C and, on the other hand, a maturing of the hydrolysis medium thus obtained at a temperature at least equal to 20°C and lower than the boiling temperature of the medium, so as to substitute at least part of the alkoxy groups of the silicon alkoxide by hydroxyl groups, without producing precipitation or gelling of silica, in a second stage, an acidic solution of an aluminium compound and/or a solution of a source of phosphate ions, and, in a third stage, a gelling agent are added to the hydrolysis medium thus obtained to form a precursor gel, the gel is then washed with water and then by means of an organic liquid, a suspension of the gel in the organic liquid is recovered, the suspension is then dried until a powder is obtained, and the powder is calcined, characterized in that the drying is carried out by atomization.

2. Process according to Claim 1, characterized in that the atomization is carried out by spraying the suspension of the gel through an orifice of small size.

3. Process according to Claim 1 or 2, characterized in that the spraying is carried out in a gas stream which is inert with respect to the gel.

4. Process according to Claim 3, characterized in that the gas stream essentially comprises nitrogen and is free from oxygen.

5. Process according to any one of Claims 1 to 4, characterized in that the temperature of the gas stream is greater than 100°C.

6. Process according to Claim 5, characterized in that the temperature of the gas stream is from 150 to 450°C at the inlet of the atomization orifice and from 20 to 200°C at the end of the atomization.

7. Process according to any one of Claims 1 to 6, characterized in that the atomization is carried out at a pressure of 1 to 10 bar.

8. Catalyst for the polymerization of olefins containing chromium on a support obtained by means of the process in accordance with any one of Claims 1 to 7.

9. Process for the polymerization of olefins according to which a catalyst in accordance with Claim 8 is used.

10. Process according to Claim 9, applied to the polymerization of ethylene.


**Patentansprüche**

1. Verfahren zur Herstellung eines Katalysatorträgers, der Siliziumdioxid und wenigstens einen unter Aluminiumoxid und Aluminiumphosphat ausgewählten Bestandteil enthält, gemäß dem man in einem ersten Schritt einen Alkohol, Wasser, ein Siliziumalkoholat und eine Säure in solchen Mengen mischt, daß das Molverhältnis Wasser/Silizium 2 bis 50 beträgt, wobei der erste Schritt bei saurem pH durchgeführt wird und einerseits die Zugabe des Wassers, der Säure, des Siliziumalkoholats und des Alkohols, wobei die Temperatur während der Zugabe kleiner oder gleich 30 °C ist, und andererseits ein Reifen des so erhaltenen Hydrolysemediums bei einer Temperatur, die wenigstens gleich 20 °C und niedriger als die Siedetemperatur des Mediums ist, umfaßt, so daß wenigstens ein Teil der Alkoxygruppen des Siliziumalkoholats durch Hydroxygruppen ersetzt wird, ohne daß ein Ausfällen oder Gelieren von Siliziumdioxid erfolgt, man dem so erhaltenen Hydrolysemedium in einem zweiten Schritt eine saure Lösung einer Aluminiumverbindung und/oder eine Lösung einer Phosphationenquelle und in einem dritten Schritt ein Geliermittel zur Bildung eines Vorläufergels hinzufügt, man danach das Gel mit Wasser und dann mit einer organischen Flüssigkeit wäscht, man eine Suspension des Gels in der organischen Flüssigkeit gewinnt, man danach die Suspension bis zum Erhalt eines Pulvers trocknet und man das Pulver glüht, dadurch gekennzeichnet, daß das Trocknen durch Zerstäuben ausgeführt wird.

2. Verfahren gemäß Anspruch 1, dadurch gekennzeichnet, daß das Zerstäuben durchgeführt wird, indem man die Suspension des Gels durch eine Öffnung mit kleiner Abmessung zerstäubt.

3. Verfahren gemäß Anspruch 1 oder 2, dadurch gekennzeichnet, daß das Zerstäuben in einem gegenüber dem Gel inerten Gasstrom durchgeführt wird.

4. Verfahren gemäß Anspruch 3, dadurch gekennzeichnet, daß der Gasstrom im wesentlichen Stickstoff umfaßt und frei von Sauerstoff ist.

5. Verfahren gemäß einem der Ansprüche 1 bis 4, dadurch gekennzeichnet, daß die Temperatur des Gasstroms höher als 100 °C ist.

6. Verfahren gemäß Anspruch 5, dadurch gekennzeichnet, daß die Temperatur des Gasstroms am Eingang der Zerstäubungsöffnung 150 bis 450 °C und am Zerstäubungsende 20 bis 200 °C beträgt.

7. Verfahren gemäß einem der Ansprüche 1 bis 6, dadurch gekennzeichnet, daß das Zerstäuben bei einem Druck von 1 bis 10 bar ausgeführt wird.

8. Katalysator für die Olefinpolymerisation, der Chrom auf einem mittels des Verfahrens gemäß einem der Ansprüche 1 bis 7 erhaltenen Träger enthält.

9. Verfahren zur Olefinpolymerisation, gemäß dem man einen Katalysator gemäß Anspruch 8 verwendet.

10. Verfahren gemäß Anspruch 9, angewendet auf die Polymerisation von Ethylen.